# EUROPÄISCHE PATENTSCHRIFT

(11) **EP 2 529 133 B1**
(45) Veröffentlichungstag und Bekanntmachung des Hinweises auf die Patenterteilung: **22.04.2015**
(21) Anmeldenummer: 10788348.0
(22) Anmeldetag: 14.12.2010
(51) Int. Cl.: F16H 63/36, F16H 63/34

(54) **SCHALTSICHERUNGSVORRICHTUNG EINES MEHRSTUFIGEN SCHALTGETRIEBES**
SHIFT SECURING DEVICE FOR A MULTI-SPEED MANUAL GEARBOX
DISPOSITIF DE PROTECTION DE CHANGEMENT DE VITESSES D'UNE BOÎTE DE VITESSES À RAPPORTS MULTIPLES

(30) Priorität: 28.01.2010 DE 102010001295
(43) Veröffentlichungstag der Anmeldung: 05.12.2012
(73) Patentinhaber: ZF Friedrichshafen AG, 88038 Friedrichshafen (DE)
(72) Erfinder: BEER, Uwe, 14476 Potsdam (DE)
(86) Internationale Anmeldenummer: PCT/EP2010/069611
(87) Internationale Veröffentlichungsnummer: WO 2011/091907

(56) Entgegenhaltungen:
- DE-A1- 19 705 557
- DE-A1- 19 914 198
- DE-A1-102007 042 805

## Beschreibung

Die Erfindung betrifft eine Schaltsicherungsvorrichtung eines mehrstufigen Schaltgetriebes gemäß den Merkmalen des Oberbegriffs des Anspruchs 1 und wie sie aus dem Dokument DE 10 2007 04 2805 A1 bekannt ist.

Mehrstufige Schaltgetriebe von Kraftfahrzeugen sind üblich in Vorgelegebauweise ausgeführt und weisen mindestens zwei achsparallele Getriebewellen auf, die selektiv über mehrere Gangstufen mit unterschiedlicher Übersetzung miteinander in Triebverbindung bringbar sind. Bei einem für einen Längseinbau in ein Kraftfahrzeug vorgesehenen Schaltgetriebe handelt es sich bei den betreffenden Getriebewellen gewöhnlich um die über eine Eingangskonstante mit der Eingangswelle in Triebverbindung stehende Vorgelegewelle und um die Ausgangswelle. Bei einem für einen Quereinbau in ein Kraftfahrzeug vorgesehenen Schaltgetriebe werden die betreffenden Getriebewellen üblicherweise durch die Eingangswelle und die Ausgangswelle gebildet. Die Gangstufen sind zumeist als Stirnzahnradpaare mit jeweils einem auf der einen Getriebewelle drehfest angeordneten Festrad und einem auf der anderen Getriebewelle drehbar gelagerten Losrad ausgebildet.

Zur Schaltung einer Gangstufe, d.h. zur Herstellung einer Triebverbindung zwischen den beiden Getriebewellen mit der Übersetzung der betreffenden Gangstufe, ist jedem Losrad eine Gangkupplung zugeordnet, mittels der das Losrad drehfest mit der betreffenden Getriebewelle verbindbar ist. Bei einem für einen Längseinbau vorgesehenen Schaltgetriebe ist die Ausgangswelle in der Regel koaxial benachbart zu der Eingangswelle angeordnet und mit dieser über eine Gangkupplung unmittelbar verbindbar, wodurch eine zusätzliche Direktgangstufe zur Verfügung steht. Um die Gangkupplungen paarweise in Schaltpaketen mit jeweils einer gemeinsamen Schaltmuffe zusammenfassen zu können, sind die Losräder axial benachbarter Stirnzahnradpaare bevorzugt zumindest paarweise auf derselben Getriebewelle angeordnet.

Zur getriebeinternen Übertragung von Wähl- und Schaltbewegungen kann, wie es vorliegend vorausgesetzt wird, eine achsparallel zu den Getriebewellen angeordnete Schaltwelle vorgesehen sein, die axial verschiebbar und um ihre Längsachse drehbar in dem Getriebegehäuse gelagert sowie über jeweils einen zugeordneten Schaltfinger selektiv mit mehreren jeweils an einer Schaltstange geführten Schaltgabeln und/oder mit mehreren Schaltschwingen koppelbar ist. Die Schaltgabeln und die Schaltschwingen stehen jeweils formschlüssig mit der Schaltmuffe eines zugeordneten Schaltpakets in Eingriff und können diese zum Ein- und Auslegen von Gangstufen axial verschieben. Die Schaltfinger sind axial und in der Regel auch umfangsseitig versetzt an der Schaltwelle angeordnet, so dass bei einer Drehung der Schaltwelle nur einer der Schaltfinger mit einem Mitnehmer einer Schaltstange oder einer Schaltschwinge in Eingriff kommt, was einem Wählvorgang bzw. der Wahl einer Schaltgasse entspricht. Durch eine anschließende Axialverschiebung der Schaltwelle wird die zuvor angekoppelte Schaltgabel oder Schaltschwinge axial verschoben bzw. um ihre Drehachse verschwenkt, wodurch die zugeordnete Schaltmuffe axial verschoben wird, welches einem Schaltvorgang bzw. dem Ein- und Auslegen eines der Gänge der gewählten Schaltgasse entspricht.

Zwar sind die Schaltstangen oder Schaltgabeln und die Schaltschwingen in den Positionen, die der Neutralstellung und den Schaltstellungen der jeweils zugeordneten Schaltmuffe entsprechen, üblicherweise mittels einer Federrastierung kraftschlüssig gesichert. Dies kann jedoch unter ungünstigen Betriebsbedingungen, wie z.B. beim Befahren einer schlechten Wegstrecke, bei dem größere Erschütterungen auftreten, und bei starken Bremsmanövern oder schneller Kurvenfahrt, die hohe Trägheitskräfte verursachen, nicht ausreichend sein, um das gleichzeitige Auslenken von mindestens zwei Schaltelementen (Schaltgabeln und/oder Schaltschwingen) aus ihrer Neutralposition zuverlässig zu verhindern. Dass die an die Schaltvorrichtung nicht-angekoppelten Schaltelemente in ihrer jeweiligen Neutralposition verbleiben, ist aber die Grundvoraussetzung für einen sicheren Betrieb des Schaltgetriebes und insbesondere für einen störungsfreien Ablauf der Wähl- und Schaltvorgänge. Demzufolge sind schon viele Bauarten von Schaltsperrvorrichtungen bzw. Schaltsicherungsvorrichtungen für mehrstufige Schaltgetriebe vorgeschlagen worden, mit denen die nicht-angekoppelten Schaltelemente selbsttätig, d.h. ohne Zuhilfenahme fremdenergiebetriebener Sperrelemente, formschlüssig in ihrer Neutralposition arretierbar sind.

Aus der DE 21 32 736 A, der DE 37 30 230 C1 und der DE 196 53 172 A1 sind Schaltsicherungsvorrichtungen für Schaltgetriebe mit an Schaltstangen geführten Schaltgabeln bekannt, bei denen bei der schaltungsbedingten Axialverschiebung einer der Schaltstangen ein oder mehrere quer zu den Schaltstangen bewegliche Sperrelemente von einer Steuerschräge der axial verschobenen Schaltstange in jeweils eine Sperrnut der übrigen Schaltstangen gedrückt und diese damit in ihrer Neutralposition arretiert werden. In der Schaltsicherungsvorrichtung nach der DE 21 32 736 A sind die Sperrelemente als in gehäuseseitigen Querbohrungen angeordnete Sperrstifte oder Sperrkugeln ausgebildet. Die Schaltsicherungsvorrichtung gemäß der DE 37 30 230 C1 weist ein einziges als eine Verriegelungsplatte ausgebildetes Sperrelement auf, das senkrecht zu den Schaltstangen angeordnet ist und mit den Kanten zugeordneter Aussparungen in jeweils eine Ringnut der nicht-angekoppelten Schaltstangen eingreift. In der Schaltsicherungsvorrichtung nach der DE 196 53 172 A1 sind die Sperrelemente als um eine achsparallele Achse drehbare Sperrbleche ausgebildet. Diese bekannten Schaltsicherungsvorrichtungen nehmen zwar wenig Bauraum in Anspruch, erfordern jedoch eine hohe Präzision bei der Herstellung der betreffenden Bauteile und sind schwierig montierbar.

In der DE 40 17 957 A1 ist eine Schaltsicherungsvorrichtung für Schaltgetriebe mit Schaltschwingen beschrieben, bei der die jeweils zwischen zwei Schaltschwingen wirksamen Sperrelemente als gehäuseseitig gelagerte Kipphebel ausgebildet sind. Bei der schaltungsbedingten Drehung einer der Schaltschwingen wird die andere Schaltschwinge durch den Eingriff eines Sperrnockens des teilweise mitverschwenkten Kipphebels in eine Verriegelungsnut in ihrer Neutralposition arretiert. Zur Kopplung von zwei axial benachbarten Kipphebeln sind eine gegenläufige Anordnung der Sperrnocken und der Verriegelungsnuten an der mittleren Schaltschwinge sowie eine die beiden Kipphebel gelenkig verbindende Schubstange vorgesehen. Diese bekannte Schaltsicherungsvorrichtung erfordert jedoch einen größeren Bauraum und ist relativ aufwendig montierbar.

Da Schaltgetriebe insbesondere zur Erzielung kompakter Abmessungen sowohl an Schaltstangen geführte Schaltgabeln als auch Schaltschwingen als Schaltelemente aufweisen können, sind hierfür spezielle Schaltsicherungsvorrichtungen erforderlich, bei denen die beiden Bauarten von Schaltelementen kombiniert sind. So ist in der DE 41 18 931 A1 eine Schaltsicherungsvorrichtung für ein Schaltgetriebe mit zwei an Schaltstangen geführten Schaltgabeln sowie zwei Schaltschwingen beschrieben, bei welcher ein als Kugel oder als Sperrplatte ausgebildetes Sperrelement der Schaltstangen und ein als Kipphebel ausgebildetes Sperrelement der Schaltschwingen über einen an dem Kipphebel angelenkten Schubhebel und einen gehäuseseitig gelagerten Schwenkhebel miteinander in Wirkverbindung sind.

Alle bislang genannten Schaltsicherungsvorrichtungen weisen den funktionstechnischen Nachteil auf, dass die nicht-angekoppelten Schaltelemente (Schaltgabeln und/oder Schaltschwingen) erst mit der Verschiebung bzw. Verschwenkung des angekoppelten Schaltelementes aus seiner Neutralposition formschlüssig gesichert werden.

Für Schaltgetriebe mit axialverschiebbar auf der Schaltwelle geführten Schaltgabeln sind dagegen Schaltsicherungsvorrichtungen bekannt, bei denen die nicht-angekoppelten Schaltgabeln schon mit dem Wählvorgang, d.h. dem Ankoppeln einer der Schaltgabeln durch eine Drehung der Schaltwelle, formschlüssig gesichert werden. So ist aus der DE 30 03 076 C2 eine Schaltsicherungseinrichtung mit einem axial gehäusefest arretierten und mit der Schaltwelle drehbaren Sperrkörper bekannt, der als eine längs geschlitzte Hülse ausgebildet und über dem einzigen Schaltfinger auf der Schaltwelle angeordnet ist. Das einzige Sperrelement ist als eine radial ausgerichtete und im Bereich des Schaltfingers radial geschlitzte Sperrplatte ausgebildet, die jeweils in eine an jedem Schaltarm der Schaltgabeln angeordnete Ausnehmung eingreift und über eine geschlitzte Schraube gegenüber dem Getriebegehäuse axial fixiert ist. Aufgrund des Längsschlitzes der Hülse und des Radialschlitzes der Sperrplatte kann nur die über den Eingriff des Schaltfingers in die Ausnehmung des betreffenden Schaltarms angekoppelte Schaltgabel mit der Schaltwelle axial verschoben werden.

In einer funktionstechnisch ähnlichen, aus der DE 199 01 055 A1 bekannten Schaltsicherungsvorrichtung ist der Sperrkörper als ein längliches, radial zwischen der Schaltwelle und den Schaltgabeln in Längsnuten der Schaltgabeln geführtes Trägerblech ausgebildet, das über ein umfangseitiges Langloch, in das ein gehäusefester Bolzen eingreift, axial fixiert ist. Die formschlüssige Arretierung der nicht-angekoppelten Schaltgabeln erfolgt jeweils durch den Eingriff von an dem Trägerblech angeordneten Sperrstiften in innere Radialnuten der Schaltgabeln, wogegen die der angekoppelten Schaltgabel zugeordneten Sperrstifte jeweils im Bereich von axialen Ausnehmungen der betreffenden Radialnut liegen. Diese Bauart von Schaltgetrieben mit axialverschiebbar auf der Schaltwelle geführten Schaltgabeln ist jedoch relativ selten und zur Erzielung kompakter Abmessungen für Schaltgetriebe mit mehr als drei Schaltelementen bzw. Schaltgassen nicht praktikabel.

Der Erfindung liegt daher die Aufgabe zugrunde, eine Schaltsicherungsvorrichtung eines mehrstufigen Schaltgetriebes vorzuschlagen, mit der das Funktionsprinzip der beiden vorgenannten Schaltsicherungsvorrichtungen bei möglichst einfachem und Platz sparenden Aufbau auf Schaltgetriebe übertragen wird, die mit an Schaltstangen geführten Schaltgabeln, mit Schaltschwingen oder mit einer Kombination beider Bauarten von Schaltelementen versehen sind.

Diese Aufgabe wird durch eine Vorrichtung mit den Merkmalen des Anspruchs 1 gelöst.

Vorteilhafte Ausgestaltungen und Weiterbildungen der erfindungsgemäßen Schaltsicherungsvorrichtung sind Gegenstand der Ansprüche 2 bis 10.

Die Erfindung geht demnach aus von einem an sich bekannten, in Vorgelegebauweise ausgeführten mehrstufigen Schaltgetriebe, das über eine achsparallel zu den Getriebewellen angeordnete Schaltwelle schaltbar ist. Die Schaltwelle ist axial verschiebbar und um ihre Längsachse drehbar in dem Getriebegehäuse gelagert sowie über jeweils einen zugeordneten Schaltfinger selektiv mit mehreren Schaltelementen koppelbar, die als jeweils an einer Schaltstange geführte Schaltgabeln und/oder als Schaltschwingen ausgebildet sein können. Zur Arretierung der aktuell nicht-angekoppelten Schaltgabeln und/oder Schaltschwingen ist ein axial gehäusefest arretierter und mit der Schaltwelle drehbarer Sperrkörper vorgesehen, an dem Sperrelemente zur formschlüssigen Arretierung der betreffenden Schaltelemente angeordnet sind.

Erfindungsgemäß ist der Sperrkörper als ein Kastenrahmen ausgebildet, der aus mindestens zwei Querträgern und zwei Längsträgern besteht. Der Kastenrahmen verfügt in jedem der Querträger über eine Lagerbohrung, in denen die Schaltwelle axial verschiebbar aufgenommen ist, wobei der Kastenrahmen über ein an einem der Querträger angeordnetes Axiallager gehäusefest arretiert ist, und über einen umfangsseitig formschlüssig in einen der Längsträger eingreifenden Mitnehmer drehfest mit der Schaltwelle verbunden.

Der Kastenrahmen bildet einen sehr stabilen und zugleich leichten Sperrkörper, der durch die Anordnung auf der Schaltwelle Platz sparend platziert ist und über seine radialen Abmessungen große Hebelarme zur Anordnung der Sperrelemente bietet. Hierdurch ergeben sich kleine Drehwinkel der Schaltwelle zum Ankoppeln des jeweils gewählten Schaltelementes und des Eingriffs der Sperrelemente in die zugeordneten Gegensperrelemente der aktuell nicht-angekoppelten Schaltelemente und somit kurze Wählwege zwischen den Schaltgassen. Auch können die Sperrelemente des Sperrkörpers und die Gegensperrelemente der Schaltelemente hierdurch zur Vermeidung von Verklemmungen mit einem gewissen Axialspiel versehen werden, ohne die Schaltsicherungsfunktion zu beeinträchtigen.

Die Montage des Kastenrahmens auf der Schaltwelle kann vorteilhaft schon zusammen mit der Montage der Schaltfinger vor dem Einsetzen der Schaltwelle in das Getriebegehäuse erfolgen. Zur Erzielung kompakter Abmessungen des Schaltgetriebes wird der als Kastenrahmen ausgebildete Sperrkörper zweckmäßig im Bereich von Festrädern der benachbarten Getriebewelle auf der Schaltwelle angeordnet, da die Festräder gegenüber den auf derselben Getriebewelle angeordneten Losrädern üblicherweise einen kleineren Durchmesser aufweisen, und in deren unmittelbarer Nähe keine Schaltgabeln oder Schaltschwingen angeordnet sind.

Die Querträger und die Längsträger des Sperrkörpers sind als Blechpress- und Blechstanzteile ausgebildet sowie starr miteinander verbunden, welches eine kostengünstige Herstellung ermöglicht.

Zur Verbindung sind die Querträger und die Längsträger des Sperrkörpers miteinander verschweißt oder endseitig ineinander gesteckt und miteinander verstemmt sein.

Das zur axialen Fixierung des Sperrkörpers gegenüber dem Getriebegehäuse dienende Axiallager kann besonders einfach und Platz sparend als eine koaxial neben der Lagerbohrung an einem Querträger befestigte Lagerhülse mit einer äußeren Ringnut ausgebildet sein, in die im montierten Zustand eine gehäusefeste Rippe eingreift.

Ebenso einfach und Platz sparend kann die drehfeste Verbindung des Kastenrahmens mit der Schaltwelle durch den Eingriff eines der Schaltfinger in einen axialen Längsschlitz gebildet sein, der in einem weitgehend tangential ausgerichteten Längsträger oder in einem weitgehend tangential ausgerichteten Abschnitt eines Längsträgers angeordnet ist.

In einer einfach herzustellenden Bauart ist zweckmäßig mindestens eines der für die Schaltgabeln vorgesehenen Sperrelemente als eine umfangsseitig-radial ausgerichtete Sperrrippe und das zugeordnete Gegensperrelement als eine in der zugeordneten Schaltstange angeordnete umfangsseitige Radialnut ausgebildet, in welche die Sperrrippe im nicht-angekoppelten Zustand der betreffenden Schaltgabel eingreift.

Mindestens eine Sperrrippe ist bevorzugt an einem über den benachbarten Längsträger radial überstehenden Kragarm eines Querträgers angeordnet, da hierdurch für den freizuhaltenden Schwenkbereich möglichst wenig Bauraum erforderlich ist.

In einer ebenfalls einfach herzustellenden Bauart ist zweckmäßig mindestens eines der für die Schaltschwingen vorgesehenen Sperrelemente als eine axial-radial ausgerichtete Sperrgabel und das zugeordnete Gegensperrelement als ein an der zugeordneten Schaltschwinge angeordneter radialer Sperrzahn ausgebildet, der im nicht-angekoppelten Zustand der betreffenden Schaltschwinge von der Sperrgabel axial umfasst wird.

Mindestens eine Sperrgabel ist bevorzugt an einem weitgehend radial ausgerichteten Längsträger oder an einem weitgehend radial ausgerichteten Abschnitt eines Längsträgers angeordnet, da dies die funktionstechnisch optimale Ausrichtung des Längsträgers für die Anordnung der Sperrgabel darstellt.

Mindestens eine Sperrgabel kann in einem sehr stabilen, zwischen zwei Querträgern liegenden Zentralabschnitt eines Längsträgers oder an einem über den benachbarten Querträger axial überstehenden Kragarm eines Längsträgers angeordnet sein.

Zur Verdeutlichung der Erfindung ist der Beschreibung eine Zeichnung mit einem Ausführungsbeispiel beigefügt. In diesen zeigt
- Fig. 1: eine Schaltvorrichtung und eine erfindungsgemäße Schaltsicherungsvorrichtung eines Schaltgetriebes in einer perspektivischen Ansicht von schräg vorne,
- Fig. 2: die Schaltvorrichtung und die Schaltsicherungsvorrichtung des Schaltgetriebes nach Fig. 1 in einer perspektivischen Ansicht von schräg hinten,
- Fig. 3: den Sperrkörper der Schaltsicherungsvorrichtung nach Fig. 1 und Fig. 2 in einer perspektivischen Einzelteilansicht, und
- Fig. 4: eine Detailansicht der Schaltsicherungsvorrichtung in einem vergrößerten Ausschnitt A von Fig. 2.

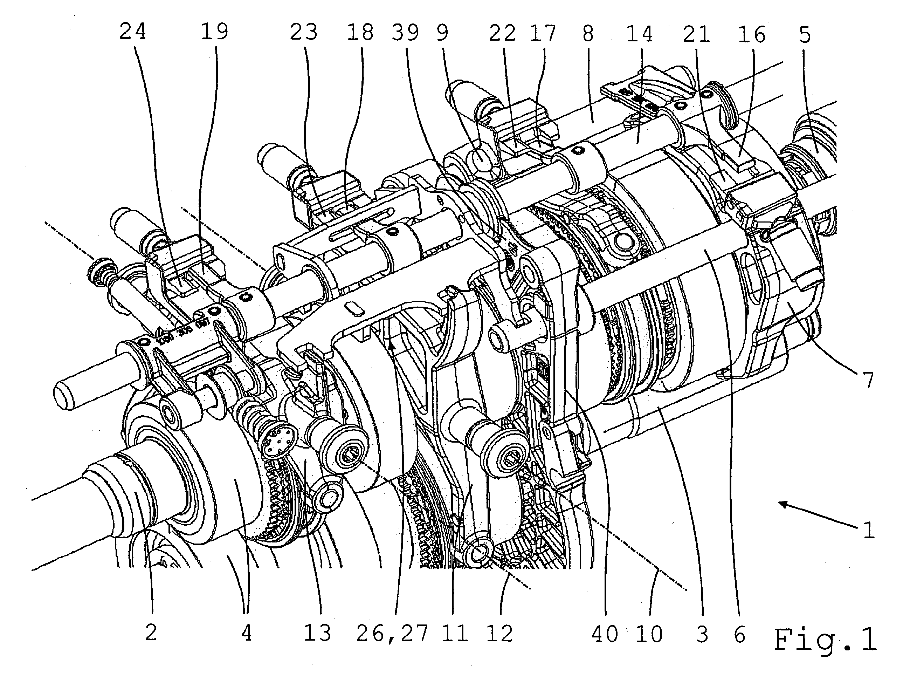

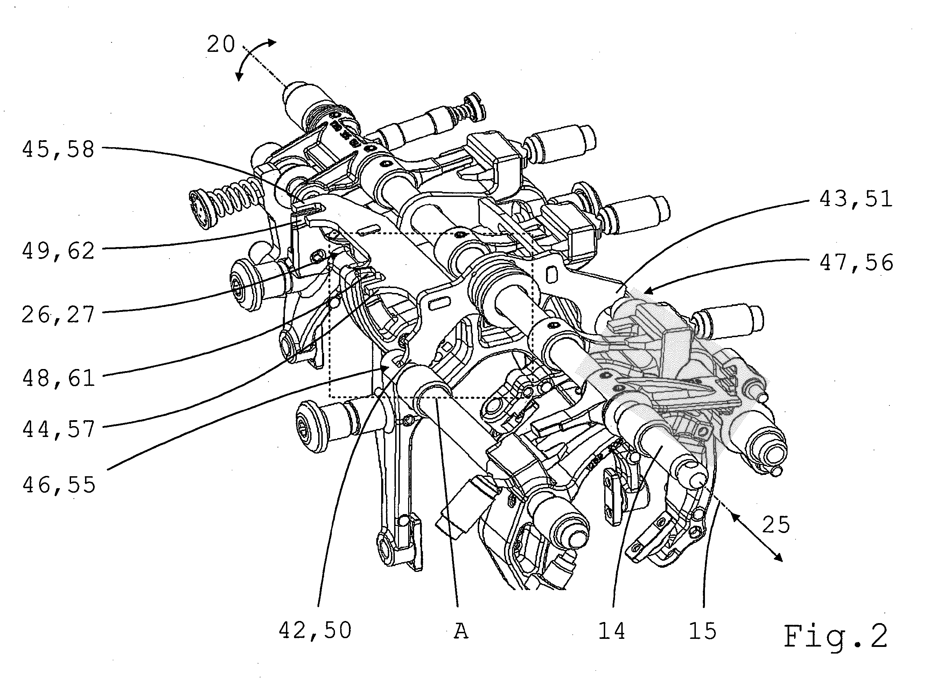

Ein in Fig. 1 und Fig. 2 nur teilweise abgebildetes, in Vorgelegebauweise ausgeführtes Schaltgetriebe 1 umfasst eine Eingangswelle 2, eine zu der Eingangswelle achsparallel angeordnete Vorgelegewelle 3, die über eine als Stirnzahnradpaar ausgebildete Eingangskonstante 4 mit der Eingangswelle 2 in Triebverbindung steht, und eine koaxial benachbart zu der Eingangswelle 2 angeordnete Ausgangswelle 5.

Das Schaltgetriebe 1 weist insgesamt sieben schaltbare Gangstufen, sechs Vorwärtsgänge G1 bis G6 und einen Rückwärtsgang R auf, von denen sechs Gangstufen durch jeweils einen zwischen der Vorgelegewelle 3 und der Ausgangswelle 5 angeordneten Stirnzahnradsatz mit jeweils einem Festrad und einem über eine Gangkupplung mit der jeweiligen Getriebewelle 3, 5 verbindbaren Losrad gebildet sind, und ein hoher Vorwärtsgang (G5 oder G6) als ein durch eine unmittelbare Verbindung der Eingangswelle 2 mit der Ausgangswelle 5 schaltbarer Direktgang ausgebildet ist. Die Gangkupplung des Rückwärtsgangs R ist als einziger Gang Bestandteil eines ersten Schaltpaketes, mit dessen Schaltmuffe eine an einer Schaltstange 6 axial verschiebbar geführte erste Schaltgabel 7 in Eingriff steht.

Die Gangkupplungen des ersten und zweiten Vorwärtsgangs G1, G2 sind in einem gemeinsamen zweiten Schaltpaket zusammengefasst, mit dessen Schaltmuffe eine an einer Schaltstange 8 axial verschiebbar geführte zweite Schaltgabel 9 in Eingriff steht. Die Gangkupplungen des dritten und vierten Vorwärtsgangs G3, G4 sind in einem gemeinsamen dritten Schaltpaket zusammengefasst, mit dessen Schaltmuffe eine um eine senkrecht zu den Getriebewellen 3, 5 ausgerichtete Drehachse 10 schwenkbar gelagerte erste Schaltschwinge 11 in Eingriff steht. Die Gangkupplungen des fünften und sechsten Vorwärtsgangs G5, G6 sind in einem gemeinsamen vierten Schaltpaket zusammengefasst, mit dessen Schaltmuffe eine um eine senkrecht zu den Getriebewellen 3, 5 ausgerichtete Drehachse 12 schwenkbar gelagerte zweite Schaltschwinge 13 in Eingriff steht.

Zur getriebeinternen Übertragung von Wähl- und Schaltbewegungen ist eine Schaltwelle 14 vorgesehen, die achsparallel zu den Getriebewellen 3, 5 und benachbart zu der Ausgangswelle 5 angeordnet ist, wobei die Schaltwelle 14 axial verschiebbar und um ihre Längsachse 15 drehbar in einem nicht näher dargestellten Getriebegehäuse gelagert ist.

Auf der Schaltwelle 14 sind axial und umfangsseitig versetzt vier Schaltfinger 16, 17, 18, 19 angeordnet, die durch eine Drehung 20 der Schaltwelle 14 um ihre Längsachse 15 selektiv in Eingriff mit einem der jeweils gabelförmig ausgebildeten Mitnehmer 21, 22, 23, 24 der vier Schaltelemente (Schaltgabeln 7, 9 und Schaltschwingen 11; 13) bringbar sind, welches einem Wählvorgang bzw. der Wahl einer Schaltgasse entspricht. Durch eine anschließende Axialverschiebung 25 der Schaltwelle 14 wird die zuvor angekoppelte Schaltgabel 7, 9 oder Schaltschwinge 11, 13 axial verschoben bzw. um ihre Drehachse 10, 12 verschwenkt, wodurch die zugeordnete Schaltmuffe axial verschoben wird, was einem Schaltvorgang bzw. dem Ein- und Auslegen eines der Gänge G1 bis G6 oder R der gewählten Schaltgasse entspricht.

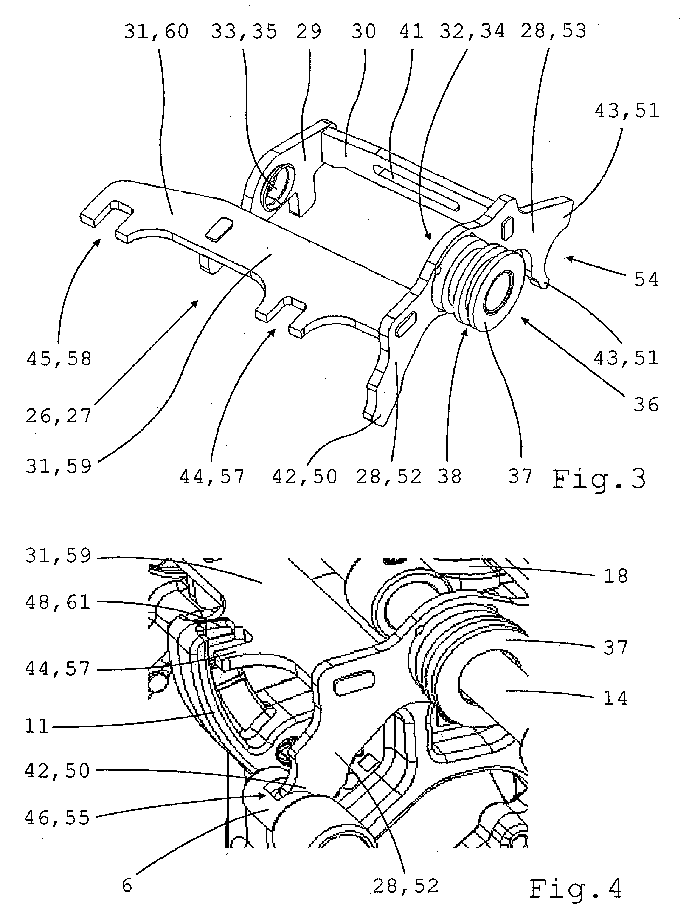

Eine erfindungsgemäße Schaltsicherungsvorrichtung zur formschlüssigen Arretierung der nicht-angekoppelten Schaltgabeln 7, 9 oder Schaltschwingen 11, 13 weist einen auf der Schaltwelle 14 angeordneten, axial gehäusefest arretierten und mit der Schaltwelle 14 drehbaren Sperrkörper 26 auf. Wie besonders in der Einzelteilansicht von Fig. 3 erkennbar ist, ist der Sperrkörper 26 als ein Kastenrahmen 27 ausgebildet, der aus zwei Querträgern 28, 29 und zwei Längsträgern 30, 31 besteht. Diese Träger 28, 29, 30, 31 sind als Blechpress- und Blechstanzteile ausgebildet und endseitig ineinander gesteckt sowie miteinander verstemmt.

Bezüglich der Schaltwelle 14 ist der eine Längsträger 30 weitgehend tangential und der andere Längsträger 31 weitgehend radial ausgerichtet. Der Kastenrahmen 27 verfügt über jeweils eine in den Querträgern 28, 29 angeordnete Lagerbohrung 32, 33, in denen jeweils eine Lagerbuchse 34, 35 eingesetzt ist. Diese Lagerbuchsen 34, 35 dienen zur axial verschiebbaren Aufnahme der Schaltwelle 14 in dem Kastenrahmen 27 des Sperrkörpers 26.

Über ein Axiallager 36 ist der Sperrkörper 26 bzw. der Kastenrahmen 27 axial gehäusefest arretiert, ohne eine Drehung 20 desselben um die Längsachse 15 zu behindern. Das Axiallager 36 ist als eine koaxial neben der Lagerbohrung 32 an dem einen Querträger 28 befestigte Lagerhülse 37 mit einer äußeren Ringnut 38 ausgebildet ist, in die eine Rippe 39 einer gehäusefesten Zwischenwand 40 eingreift. Durch eine drehfeste Verbindung des Kastenrahmens 27 mit der Schaltwelle 14, die durch den Eingriff eines Schaltfingers 18 in einen in dem Längsträger 30 angeordneten axialen Längsschlitz 41 gebildet ist, wird der Sperrkörper 26 bei einem Wählvorgang zusammen mit der Schaltwelle 14 um die Längsachse 15 gedreht.

Mit der formschlüssigen Ankopplung einer der Schaltgabeln 7, 9 oder der Schaltschwingen 11, 13 an die Schaltwelle 14, die durch den Eingriff eines der Schaltfinger 16, 17, 18, 19 in den betreffenden Mitnehmer 21, 22, 23, 24 erfolgt, kommen zugleich an dem Kastenrahmen 27 angeordnete Sperrelemente 42, 43, 44, 45 in Eingriff mit zugeordneten Gegensperrelementen 46, 47, 48, 49 der nicht-angekoppelten Schaltelemente 7, 9, 11, 13, wodurch diese formschlüssig gegen eine Axialverschiebung bzw. Verschwenkung aus ihren Neutralpositionen gesichert sind.

Die für die Schaltgabeln 7, 9 vorgesehenen Sperrelemente 42, 43 sind jeweils als eine umfangsseitig-radial ausgerichtete Sperrrippe 50, 51 ausgebildet, die an einem über den benachbarten Längsträger 30, 31 radial überstehenden Kragarm 52, 53 des einen Querträgers 28 angeordnet sind.

In der Einzelteilansicht von Fig. 3 ist erkennbar, dass die der Schaltgabel 9 zugeordnete Sperrrippe 51 durch eine Ausnehmung 54 unterbrochen ist, um im angekoppelten Zustand der Schaltgabel 9 die Schaltbarkeit der Gänge G1, G2 zu ermöglichen.

Die zugeordneten Gegensperrelemente 46, 47 der Schaltgabeln 7, 9 sind jeweils als eine in der zugeordneten Schaltstange 6, 8 angeordnete umfangsseitige Radialnut 55, 56 ausgebildet, in welche die jeweilige Sperrrippe 50, 51 im nicht-angekoppelten Zustand der betreffenden Schaltgabel 7, 9 eingreift.

Die für die Schaltschwingen 11, 13 vorgesehenen Sperrelemente 44, 45 sind jeweils als eine axial-radial ausgerichtete Sperrgabel 57, 58 ausgebildet, die an dem Längsträger 31 in einem zwischen den zwei Querträgern 30, 31 liegenden Zentralabschnitt 59 bzw. an einem über den benachbarten Querträger 31 axial überstehenden Kragarm 60 angeordnet sind. Die zugeordneten Gegensperrelemente 48, 49 der Schaltschwingen 11, 13 sind jeweils als ein unmittelbar an der betreffenden Schaltschwinge 11, 13 angeordneter radialer Sperrzahn 61, 62 ausgebildet, die im nicht-angekoppelten Zustand der betreffenden Schaltschwinge 11, 13 von der jeweiligen Sperrgabel 57, 58 axial umfasst werden.

In den Abbildungen der Figuren 1 und 2 ist ein Betriebszustand des Schaltgetriebes 1 dargestellt, in dem die Schaltschwinge 11 durch den Eingriff des Schaltfingers 18 in den betreffenden Mitnehmer 23 an die Schaltwelle 14 angekoppelt ist, d.h. die Schaltgasse der Gänge G3, G4 angewählt ist. In diesem Betriebszustand sind die übrigen Schaltelemente 7, 9, 13 durch den Eingriff des jeweiligen Sperrelementes 42, 43, 45 des Sperrkörpers 26 in das entsprechende Gegensperrelement 46, 47, 49 formschlüssig in ihrer Neutralposition arretiert.

In dem in Fig. 4 abgebildeten vergrößerten Ausschnitt A von Fig. 2 ist erkennbar, dass das der Schaltgasse des Rückwärtsgangs R zugeordnete, an dem Kragarm 52 des Querträgers 28 angeordnete, und als eine umfangsseitig-radial ausgerichtete Sperrrippe 50 ausgebildete Sperrelement 42 in das in der zugeordneten Schaltstange 6 angeordnete und als eine umfangsseitige Radialnut 55 ausgebildete Gegensperrelement 46 eingreift, wodurch die zugeordnete Schaltgabel 7 in ihrer Neutralposition arretiert ist.

Ebenso ist in Fig. 4 in Verbindung mit Fig. 1 erkennbar, dass das der Schaltgasse der Gänge G3, G4 zugeordnete, in dem Zentralabschnitt 59 an dem Längsträger 31 angeordnete, und als eine axial-radial ausgerichtete Sperrgabel 57 ausgebildete Sperrelement 44 außer Eingriff ist mit dem an der betreffenden Schaltschwinge 11 angeordneten und als ein radialer Sperrzahn 61 ausgebildeten Gegensperrelement 48. Dadurch ist die über den Eingriff des Schaltfingers 18 in den Mitnehmer 23 angekoppelte Schaltschwinge 11 durch eine Axialverschiebung 25 der Schaltwelle 14 verschwenkbar und damit die Gänge G3, G4 schaltbar, d.h. ein- und auslegbar.

Die wesentlichen Vorteile der vorgestellten Schaltsicherungsvorrichtung bestehen in dem einfachen und Platz sparenden Aufbau sowie in der vielseitigen Anwendbarkeit. So kann die vorliegende Schaltsicherungsvorrichtung auf einfache Weise an unterschiedlich aufgebaute Schaltgetriebe angepasst werden.

### Bezugszeichen

- 1: Schaltgetriebe
- 2: Eingangswelle
- 3: Vorgelegewelle
- 4: Eingangskonstante
- 5: Ausgangswelle
- 6: Schaltstange
- 7: Erste Schaltgabel
- 8: Schaltstange
- 9: Zweite Schaltgabel
- 10: Drehachse
- 11: Erste Schaltschwinge
- 12: Drehachse
- 13: Zweite Schaltschwinge
- 14: Schaltwelle
- 15: Längsachse
- 16: Schaltfinger
- 17: Schaltfinger
- 18: Schaltfinger
- 19: Schaltfinger
- 20: Drehung
- 21: Mitnehmer
- 22: Mitnehmer
- 23: Mitnehmer
- 24: Mitnehmer
- 25: Axialverschiebung
- 26: Sperrkörper
- 27: Kastenrahmen
- 28: Querträger
- 29: Querträger
- 30: Längsträger
- 31: Längsträger
- 32: Lagerbohrung
- 33: Lagerbohrung
- 34: Lagerbuchse
- 35: Lagerbuchse
- 36: Axiallager
- 37: Lagerhülse
- 38: Ringnut
- 39: Rippe
- 40: Zwischenwand
- 41: Längsschlitz
- 42: Sperrelement
- 43: Sperrelement
- 44: Sperrelement
- 45: Sperrelement
- 46: Gegensperrelement
- 47: Gegensperrelement
- 48: Gegensperrelement
- 49: Gegensperrelement
- 50: Sperrrippe
- 51: Sperrrippe
- 52: Kragarm
- 53: Kragarm
- 54: Ausnehmung
- 55: Radialnut
- 56: Radialnut
- 57: Sperrgabel
- 58: Sperrgabel
- 59: Zentralabschnitt
- 60: Kragarm
- 61: Sperrzahn
- 62: Sperrzahn
- A: Ausschnitt
- G1-G6: Vorwärtsgang
- R: Rückwärtsgang

## Patentansprüche

1. Schaltsicherungsvorrichtung eines mehrstufigen Schaltgetriebes, das über eine achsparallel zu den Getriebewellen (2, 3, 5) angeordnete Schaltwelle (14) schaltbar ist, die axial verschiebbar und um ihre Längsachse (15) drehbar gelagert sowie über jeweils einen zugeordneten Schaltfinger (16, 17, 18, 19) selektiv mit mindestens einer an einer Schaltstange (6, 8) geführten Schaltgabel (7, 9) und/oder einer Schaltschwinge (11, 13) koppelbar ist, mit einem axial gehäusefest arretierten und mit der Schaltwelle (14) drehbaren Sperrkörper (26), an dem Sperrelemente (42, 43, 44, 45) zur formschlüssigen Arretierung einer nicht-angekoppelten Schaltgabel (7, 9) oder Schaltschwinge (11, 13) angeordnet sind, wobei der Sperrkörper (26) als ein Kastenrahmen (27) mit mindestens zwei Querträgern (28, 29) und zwei Längsträgern (30, 31) ausgebildet ist, der über jeweils eine in den Querträgern (28, 29) angeordnete Lagerbohrung (32, 33) verfügt, in denen die Schaltwelle (14) axial verschiebbar aufgenommen ist, der über einen umfangsseitig formschlüssig in einen der Längsträger (30) eingreifenden Mitnehmer (18) drehfest mit der Schaltwelle (14) verbunden ist, und der über ein an einem der Querträger (28) angeordnetes Axiallager (36) gehäusefest arretiert ist, **dadurch gekennzeichnet, dass** die Querträger (28, 29) und die Längsträger (30, 31) des Sperrkörper (26) als starr miteinander verbundene Blechpress- und Blechstanzteile ausgebildet sind und wobei die Querträger (28, 29) und die Längsträger (30, 31) des Sperrkörpers (26) miteinander verschweißt oder endseitig ineinander gesteckt und miteinander verstemmt sind.

2. Schaltsicherungsvorrichtung nach Anspruch 1, **dadurch gekennzeichnet, dass** das Axiallager (36) als eine koaxial neben der Lagerbohrung (32) an einem Querträger (28) befestigte Lagerhülse (37) mit einer äußeren Ringnut (38) ausgebildet ist, in die im montierten Zustand eine gehäusefeste Rippe (39) eingreift.

3. Schaltsicherungsvorrichtung nach Anspruch 1 oder 2, **dadurch gekennzeichnet, dass** die drehfeste Verbindung des Kastenrahmens (27) mit der Schaltwelle (14) durch den Eingriff eines der Schaltfinger (18) in einen axialen Längsschlitz (41) gebildet ist, der in einem weitgehend tangential ausgerichteten Längsträger (30) oder in einem weitgehend tangential ausgerichteten Abschnitt eines Längsträgers angeordnet ist.

4. Schaltsicherungsvorrichtung nach einem der Ansprüche 1 bis 3, **dadurch gekennzeichnet, dass** mindestens ein für eine Schaltgabel (7, 9) vorgesehenes Sperrelemente (42, 43) als eine umfangsseitig-radial ausgerichtete Sperrrippe (50, 51) ausgebildet ist, und dass das zugeordnete Gegensperrelement (46, 47) als eine in der zugeordneten Schaltstange (6, 8) angeordnete umfangsseitige Radialnut (55, 56) ausgebildet ist, in welche die Sperrrippe (50, 51) im nicht-angekoppelten Zustand der betreffenden Schaltgabel (7, 9) eingreift.

5. Schaltsicherungsvorrichtung nach Anspruch 4, **dadurch gekennzeichnet, dass** mindestens eine Sperrrippe (50, 51) an einem über den benachbarten Längsträger (30, 31) radial überstehenden Kragarm (52, 53) eines Querträgers (28) angeordnet ist.

6. Schaltsicherungsvorrichtung nach einem der Ansprüche 1 bis 5, **dadurch gekennzeichnet, dass** mindestens ein für eine Schaltschwinge (11, 13) vorgesehenes Sperrelemente (44, 45) als eine axial-radial ausgerichtete Sperrgabel (57, 58) ausgebildet ist, und dass das zugeordnete Gegensperrelement (48, 49) als ein an der zugeordneten Schaltschwinge (11, 13) angeordneter radialer Sperrzahn (61, 62) ausgebildet ist, der im nicht-angekoppelten Zustand der betreffenden Schaltschwinge (11, 13) von der Sperrgabel (57, 58) axial umfasst wird.

7. Schaltsicherungsvorrichtung nach Anspruch 6, **dadurch gekennzeichnet, dass** mindestens eine Sperrgabel (57, 58) an einem weitgehend radial ausgerichteten Längsträger (31) oder an einem weitgehend radial ausgerichteten Abschnitt eines Längsträgers angeordnet ist.

8. Schaltsicherungsvorrichtung nach Anspruch 6 oder 7, **dadurch gekennzeichnet, dass** mindestens eine Sperrgabel (57, 58) in einem zwischen zwei Querträgern (28, 29) liegenden Zentralabschnitt (59) eines Längsträgers (31) oder an einem über den benachbarten Querträger (29) axial überstehenden Kragarm (60) eines Längsträgers (31) angeordnet ist.

## Claims

1. Shift securing device for a multi-speed manual gearbox which is shiftable via a shift shaft (14) which is arranged axially parallel to the transmission shafts (2, 3, 5) and which is mounted axially displaceably and rotatably about its longitudinal axis (15) and is selectively couplable in each case via an assigned shift finger (16, 17, 18, 19) to at least one shift fork (7, 9) and/or shift rocker (11, 13) guided on a shift rod (6, 8), with a locking body (26) which is detained axially, fixed with respect to the housing, and is rotatable together with the shift shaft (14) and on which locking elements (42, 43, 44, 45) for the positive detention of a non-coupled shift fork (7, 9) or shift rocker (11, 13) are arranged, the locking body (26) being designed as a box frame (27) with at least two crossmembers (28, 29) and two longitudinal members (30, 31), which box frame has in each case a bearing bore (32, 33) arranged in the crossmembers (28, 29), in which bearing bores the shift shaft (14) is accommodated axially displaceably, which box frame is connected fixedly into rotation to the shift shaft (14) via a dog (18) circumferentially engaging positively into one of the longitudinal members (30) and is detained, fixed with respect to the housing, via an axial bearing (36) arranged on one of the crossmembers (28), **characterized in that** the crossmembers (28, 29) and the longitudinal members (30, 31) of the locking body (26) are designed as sheet-metal pressed and sheet-metal stamped parts connected rigidly to one another, the crossmembers (28, 29) and the longitudinal members (30, 31) of the locking body (26) being welded to one another or being plugged one into the other at the end faces and caulked with one another.

2. Shift securing device according to Claim 1, **characterized in that** the axial bearing (36) is designed as a bearing sleeve (37) fastened to a crossmember (28) coaxially next to the bearing bore (32) and having an outer annular groove (38), into which a rib (39) fixed with respect to the housing engages in the assembled state.

3. Shift securing device according to Claim 1 or 2, **characterized in that** the rotationally fixed connection of the box frame (27) to the shift shaft (14) is formed by the engagement of one of the shift fingers (18) into an axial longitudinal slot (41) which is arranged in a largely tangentially oriented longitudinal member (30) or in a largely tangentially oriented portion of a longitudinal member.

4. Shift securing device according to one of Claims 1 to 3, **characterized in that** at least one locking element (42, 43) provided for a shift fork (7, 9) is designed as a circumferentially radially oriented locking rib (50, 51), and **in that** the assigned counterlocking element (46, 47) is designed as a circumferential radial groove (55, 56) which is arranged in the assigned shift rod (6, 8) and into which the locking rib (50, 51) engages in the non-coupled state of the respective shift fork (7, 9).

5. Shift securing device according to Claim 4, **characterized in that** at least one locking rib (50, 51) is arranged on a jib (52, 53) of a crossmember (28), the said jib projecting radially beyond the adjacent longitudinal member (30, 31).

6. Shift securing device according to one of Claims 1 to 5, **characterized in that** at least one locking element (44, 45) provided for a shift rocker (11, 13) is designed as an axially-radially oriented locking fork (57, 58) and **in that** the assigned counterlocking element (48, 49) is designed as a radial locking tooth (61, 62) which is arranged on the assigned shift rocker (11, 13) and which is surrounded axially by the locking fork (57, 58) in the non-coupled state of the respective shift rocker (11, 13).

7. Shift securing device according to Claim 6, **characterized in that** at least one locking fork (57, 58) is arranged on a largely radially oriented longitudinal member (31) or on a largely radially oriented portion of a longitudinal member.

8. Shift securing device according to Claim 6 or 7, **characterized in that** at least one locking fork (57, 58) is arranged in a central portion (59), lying between two crossmembers (28, 29), of a longitudinal member (31) or on a jib (60) projecting axially beyond the adjacent crossmember (29), of a longitudinal member (31).

## Revendications

1. Dispositif de protection de changement de vitesses d'une boîte de vitesses à rapports multiples, dont le rapport peut être changé par le biais d'un arbre de changement de vitesses (14) dont l'axe est parallèle aux arbres de boîte de vitesses (2, 3, 5), lequel arbre de changement de vitesses est monté de manière déplaçable axialement et de manière à pouvoir tourner autour de son axe longitudinal (15) et peut être accouplé de manière sélective à au moins une fourchette de changement de vitesses (7, 9) et/ou à une bielle de changement de vitesses (11, 13) guidée sur une tringle de changement de vitesses (6, 8) par le biais d'un doigt de changement de vitesses (16, 17, 18, 19) associé respectif, comprenant un corps de verrouillage (26) bloqué axialement de manière solidaire du boîtier et pouvant tourner avec l'arbre de changement de vitesses (14), sur lequel corps de verrouillage sont prévus des éléments de verrouillage (42, 43, 44, 45) pour le blocage par engagement par complémentarité de formes d'une fourchette de changement de vitesses (7, 9) ou d'une bielle de changement de vitesses (11, 13) non accouplée, le corps de verrouillage (26) étant réalisé sous la forme d'un châssis en caisson (27) comprenant au moins deux traverses (28, 29) et deux longerons (30, 31), lequel comporte respectivement un alésage de palier (32, 33) disposé dans les traverses (28, 29), dans lesquels l'arbre de changement de vitesses (14) est reçu de manière déplaçable axialement, lequel châssis en caisson est relié de manière solidaire en rotation à l'arbre de changement de vitesses (14) par le biais d'un élément d'entraînement (18) venant en prise du côté périphérique par engagement par complémentarité de formes dans l'un des longerons (30), et lequel châssis en caisson est bloqué de manière solidaire du boîtier par le biais d'un palier axial (36) disposé sur l'une des traverses (28), **caractérisé en ce que** les traverses (28, 29) et les longerons (30, 31) du corps de verrouillage (26) sont réalisés sous forme de pièces embouties en tôle et de pièces estampées en tôle reliées rigidement les unes aux autres, et les traverses (28, 29) et les longerons (30, 31) du corps de verrouillage (26) étant soudés les uns aux autres ou emboîtés les uns dans les autres à leurs extrémités et matés les uns sur les autres.

2. Dispositif de protection de changement de vitesses selon la revendication 1, **caractérisé en ce que** le palier axial (36) est réalisé sous la forme d'une douille de palier (37) fixée à une traverse (28) de manière coaxiale près de l'alésage de palier (32) et comprenant une rainure annulaire extérieure (38) dans laquelle vient en prise une nervure (39) solidaire du boîtier à l'état monté.

3. Dispositif de protection de changement de vitesses selon la revendication 1 ou 2, **caractérisé en ce que** la liaison solidaire en rotation du châssis en caisson (27) avec l'arbre de changement de vitesses (14) est formée par l'engagement de l'un des doigts de changement de vitesses (18) dans une fente longitudinale axiale (41) qui est disposée dans un longeron (30) orienté dans une large mesure tangentiellement ou dans une portion, orientée dans une large mesure tangentiellement, d'un longeron.

4. Dispositif de protection de changement de vitesses selon l'une quelconque des revendications 1 à 3, **caractérisé en ce qu'**au moins un élément de verrouillage (42, 43) prévu pour une fourchette de changement de vitesses (7, 9) est réalisé sous la forme d'une nervure de verrouillage (50, 51) orientée radialement du côté périphérique, et **en ce que** l'élément de verrouillage conjugué (46, 47) associé est réalisé sous la forme d'une rainure radiale (55, 56) périphérique disposée dans la tringle de changement de vitesses (6, 8) associée, dans laquelle rainure radiale vient en prise la nervure de verrouillage (50, 51) à l'état non accouplé de la fourchette de changement de vitesses (7, 9) concernée.

5. Dispositif de protection de changement de vitesses selon la revendication 4, **caractérisé en ce qu'**au moins une nervure de verrouillage (50, 51) est disposée sur un bras en porte-à-faux (52, 53), faisant saillie radialement au-delà du longeron adjacent (30, 31), d'une traverse (28).

6. Dispositif de protection de changement de vitesses selon l'une quelconque des revendications 1 à 5, **caractérisé en ce qu'**au moins un élément de verrouillage (44, 45) prévu pour une bielle de changement de vitesses (11, 13) est réalisé sous la forme d'une fourchette de verrouillage (57, 58) orientée de manière radialement axiale, et **en ce que** l'élément de verrouillage conjugué (48, 49) associé est réalisé sous la forme d'une dent de verrouillage (61, 62) radiale disposée sur la bielle de changement de vitesses (11, 13) associée, laquelle dent de verrouillage est entourée axialement par la fourchette de verrouillage (57, 58) à l'état non accouplé de la bielle de changement de vitesses (11, 13) concernée.

7. Dispositif de protection de changement de vitesses selon la revendication 6, **caractérisé en ce qu'**au moins une fourchette de verrouillage (57, 58) est disposée sur un longeron (31) orienté dans une large mesure radialement ou sur une portion, orientée dans une large mesure radialement, d'un longeron.

8. Dispositif de protection de changement de vitesses selon la revendication 6 ou 7, **caractérisé en ce qu'**au moins une fourchette de verrouillage (57, 58) est disposée dans une portion centrale (59), située entre deux traverses (28, 29) d'un longeron (31) ou sur un bras en porte-à-faux (60), faisant saillie axialement au-delà de la traverse adjacente (29), d'un longeron (31).
